# EUROPEAN PATENT SPECIFICATION

(11) **EP 3 401 501 B1**
(45) Date of publication and mention of the grant of the patent: **03.04.2024**
(21) Application number: 18170862.9
(22) Date of filing: 04.05.2018
(51) Int. Cl.: F01C 17/02, F04C 29/02, F04C 18/12

(54) **LUBRICATION OF GEARS IN TWIN-SHAFT PUMPS**
SCHMIERUNG VON GETRIEBEN IN DOPPELWELLENPUMPEN
LUBRIFICATION D'ENGRENAGES DANS DES POMPES À DEUX ARBRES

(30) Priority: 10.05.2017 GB 201707458
(43) Date of publication of application: 14.11.2018
(73) Proprietor: Edwards Limited, Burgess Hill, Sussex RH15 9TW (GB)
(72) Inventor: SCHOFIELD, Nigel Paul, Burgess Hill, Sussex RH15 9TW (GB)
(74) Representative: Norton, Ian Andrew

(56) References cited:
- EP-A2- 2 431 568
- WO-A1-2006/111695
- WO-A1-2008/142437
- WO-A1-2014/174273
- DE-U1-202014 007 850
- US-A- 2 708 985
- US-A- 4 181 379
- US-A1- 2015 337 716

## Description

### FIELD OF THE INVENTION

The invention relates to the field of pumps and in particular twin-shaft pumps where the two shafts rotate in a synchronised manner.

### BACKGROUND

Where a pump has two shafts it is important that they are synchronised with each other. Although timing gears can be used to ensure that the shafts rotate in a synchronised manner, this can be problematic in dry vacuum pumps for example where it is important to protect the vacuum from contamination by oil.

In the high vacuum/scientific market, very small screw pumps typically 10m/hr which run at speeds of 20,000 to 30,000 rpm are sometimes used. A key feature of these pumps is their very small size and lack of any oil in the system. Their small size makes them prone to being tilted or turned upside down during transport or indeed in use. This leads to the use of oil as a lubricant being potentially problematic. However, their high speed of operation means that any gearing without oil lubrication can lead to difficulties. Lubricating gears with grease is not effective at high speeds. One solution to this has been to time the shafts magnetically and drive them with two motor rotors, one on each shaft. The bearings in such a machine are all grease lubricated, and there are no gears. A potential problem with timing the shafts magnetically is that it is complicated, relatively expensive, and the pump is prone to seizure if the pump is roughed.

DE202014007850 U1, EP2431568A2, US2015/337716A1 and WO2008/142437A1 disclose vacuum pumps having oil distribution systems including oil throwers as known in the art.

US4181379A, WO2006/111695A1 and US2708985A disclose alternative lubricant distribution systems.

it would be desirable to find a different solution to shaft synchronisation that would work for small, high speed machines.

### SUMMARY

A first aspect provides a twin-shaft vacuum pump according to claim 1.

The inventor of the present invention recognised that although there was a technical prejudice against using oil within some pumps such that the use of timing gears to synchronise twin-shafts becomes problematic, one solution to this might be, rather than finding an alternative to gears, finding a way of constraining the oil. In this way oil may be used to lubricate while avoiding or at least reducing any "free" oil present within the pump. Problems associated with oil leakage into different parts of the pump during transport or use can then be avoided or at least reduced. In this regard the inventor recognised that the use of some sort of porous material within an oil reservoir would allow the oil to be held within the pores of the material and avoid or at least reduce any oil leaking from the reservoir even were the reservoir to be tipped or inverted. Furthermore, although gears require effective lubrication such that free oil is generally used, it is found that the supply of oil by a wick is sufficient for effective lubrication as it is aided by the high speed of rotation and furthermore the supplied oil migrates to the required lubrication location that is towards the intermeshing surfaces of the gears.

A porous material such as a sponge or felt type material within a reservoir along with some wicking material to bring the oil from the reservoir to the components requiring lubrication and in particular to gears mounted on the twin-shafts, would provide both lubrication and a way of constraining oil leakage allowing the twin shafts of a twin-shaft pump to be synchronised and operated at a high speed.

In some embodiments, said at least one wick extends to contact a surface of at least one of: said first shaft and said gear mounted on said first shaft.

In order to transfer the oil from the reservoir to lubricate the gear, the wick may extend to contact a surface of the shaft or a surface of the gear itself. The surface of the gear may be the gear hub or the gear wheel. The oil will then migrate towards the teeth of the gear being thrown outwards towards these teeth in operation by centrifugal force due to the rotation of the shaft and gear.

In some embodiments, said at least one wick extends to contact a tapered surface having a diameter that increases towards said gear wheel of said gear mounted on said first shaft, rotation of said first shaft causing said tapered surface to rotate and exerting a centrifugal force on oil contacting said tapered surface and causing said oil to migrate from said at least one wick along said increasing diameter surface towards said gear wheel.

In order to improve the transport of the oil a tapered surface may be used whose diameter increases towards the gear wheel of the gear. In this way, oil that contacts this tapered surface will be driven by centrifugal force along the increasing diameter towards the gear wheel. In effect the rotation of the shafts is used to provide a force on the oil to draw it from a wick along the shaft towards the lubrication site making this an effective means of lubricating while still constraining oil migration or leakage along other paths. The higher the speed of rotation the higher the centrifugal force pulling the oil, thus this solution has the additional advantage of providing lubrication which improves with speed of rotation.

Although the gears mounted on the two shafts may in some embodiments be aligned with each other, in some embodiments one gear overlaps on at least one side with respect to the other.

In some embodiments, said gear mounted on a second of said two shafts is arranged to extend in an axial direction beyond said gear on said first shaft in a direction towards said wick extending towards said first shaft.

Overlap of one of the gears with respect to the other provides a way of catching oil flung from the edge of one gear wheel and helps not only provide lubrication to a further gear wheel without a direct wick, but also reduces the amount of oil migrating to unwanted parts of the machine in use. In this regard although the reservoir and porous material provides a very effective way of holding the oil in place when the pump is not in use and in particular, in transport, once the oil reaches a rotating surface it will migrate towards an outer surface and at least some of the oil will be flung off the outer surface. Providing the overlap makes use of this and provides an effective way of lubricating one gear wheel from another, while also reducing unwanted free oil in the system.

This overlap may be achieved by mounting the gears with an offset with respect to each other or it might be achieved by having different sized gear wheels. In either case one overlaps the end of the other one on at least one side. Where the oil is being supplied to only one of the gears, then it will be forced by centrifugal force towards the outer circumference of the gear wheel of that gear and some will be flung off the outer edge of that gear wheel. If there is an overlapping gear wheel, then it will be in the path of the oil being thrown from the gear wheel and lubrication of the second gear wheel from the first gear wheel can be effectively performed without supplying oil by a wick to the second shaft or gear.

In some embodiments, said wick is arranged to extend towards a portion of said first shaft on a side of said gear wheel remote from said pumping chamber. While in other embodiments, said wick is arranged to extend towards a portion of said first shaft on a same side of said gear wheel as said pumping chamber.

The wick may be arranged to extend towards a portion of the first shaft, either on the same side of the gear wheel as the pumping chamber of on the far side.

In some embodiments, there is a wick that extends to either side of the gear wheel. In such a case, there may be a tapered surface on both sides of the gear wheel and thus the oil is effectively supplied to both sides of the gear wheel which may improve lubrication.

In some embodiments, said gear wheel mounted on said second shaft is thicker than said gear wheel mounted on said first shaft and extends beyond said gear wheel mounted on said first shaft on both sides.

Although in some embodiments the gear wheels mounted on both shafts have the same thickness, in some embodiments the gear wheel mounted on the second shaft may be thicker than the gear wheel mounted on the first shaft. Where the wick supplies oil just to the first shaft, then as noted previously, an overlap with the gear wheel on the other shaft allows oil to be effectively supplied to that gear wheel. If the gear wheel overlaps on both sides, then this may be particularly advantageous where the pump comprises a wick extending from the oil reservoir towards the shaft on both sides of the gear wheel. In this case both sides of the gear wheel are substantially equally lubricated and the second gear wheel picks up oil thrown by centrifugal force from both sides of the gear wheel mounted on the first shaft.

In some embodiments, said pump comprises a further wick extending from said oil reservoir towards said second of said two shafts, said wick and said further wick being configured to supply oil to said gears mounted on said respective shafts.

Although the gears may be lubricated by simply supplying oil to one of the gears mounted on one of the shafts, in some embodiments, there may be a wick extending towards both shafts such that oil is supplied via wicks to both gears.

In some cases, and in particular where one of the gear wheels is offset with respect to the other, then the wicks extending towards both shafts extend towards them on either side of the gear wheels. In this way, the gear wheel that provides the overlap on one side is the gear wheel that is not being supplied with oil from a wick on that side. Thus oil flung from the edge of the lubricated gear wheel will more easily contact the overlapping gear wheel mounted on the other shaft.

In some embodiments, said pump comprises two further wicks extending from said oil reservoir towards said second of said two shafts, said two further wicks extending towards said second shaft on either side of said gear wheel.

In some cases, the gears on both shafts may be lubricated from both sides and a plurality of further wicks may be used.

In some embodiments, the pump comprises two further wicks, said respective two further wicks extending towards each of said shafts and being operable to supply oil by capillary action from said porous material along said wicks to lubricate bearings in which said shafts are mounted.

Where an oil reservoir is used to lubricate the gear wheels then it may be advantageous if this lubrication system is also used to lubricate the bearings. In this regard, bearings may be lubricated with grease to provide lubrication which does not allow free oil to be present in the system, however in some cases where an oil reservoir with a porous material is used, then additional wicks can supply oil from this reservoir to the bearings and they can be lubricated in the same way as the gears, to provide an effective and cost efficient lubrication.

In some embodiments, said pump comprises a tapered surface on each of said shafts, said tapered surface having a diameter that increases towards said bearings, said two further wicks extending to contact said tapered surfaces.

To provide more effective lubrication of the bearings using this wicking system, a tapered surface is advantageous with an increasing diameter towards the bearings such that centrifugal forces help transport the oil towards the bearings.

In some embodiments, in operation of the pump said shafts are substantially horizontal and said oil reservoir is mounted below said first and said second shaft and an opening in said reservoir through which said wick extends is in an upper surface of said reservoir.

Although the twin shaft pump may be one with vertical shafts, in some embodiments it comprises shafts that are substantially horizontal when in operation and in such a case, the oil reservoir is mounted so that its surface from which the wick extends is an upper surface below the two shafts. Where the shafts are vertically mounted in use then the oil reservoir opening from which the wick extends is in a surface perpendicular to, below and facing towards the shafts. Mounting the oil reservoir below the shafts allows any oil flung from the gear wheels during operation to drain back into the reservoir.

In some embodiments, the vacuum pump comprises a screw pump while in other embodiments it comprises a multi-stage roots pump.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a twin-shaft pump according to an embodiment;
Figure 2 illustrates the shafts, gear wheels and oil reservoir of an embodiment; and
Figure 3 illustrates the shafts, gear wheels and oil reservoir of a further embodiment.

### DESCRIPTION OF THE EMBODIMENTS

Before discussing the embodiments in any more detail, first an overview will be provided.

Twin shaft pumps and in particular, vacuum pumps such as screw pumps and multi stage roots pumps require the shafts to be synchronised. Where the pumps are for example, high vacuum pumps that are sensitive to oil contamination and operate at high speeds, then alternatives to timing gears have been used to avoid the need to lubricate these gear wheels.

In this regard, gears require oil lubrication if they are to operate for more than a few hours at high speed. Grease lubrication of gears is only suitable for low speed or short run times. Dry running gears also have a very limited operational life and are not suitable for such applications.

This problem has been addressed in a low cost, simple and yet effective manner in embodiments of the invention. The solution involves the use of timing gears moubted on the shafts lubricated by oil supplied to the gears from a porous material within a reservoir via a wick.

Embodiments use a felt reservoir to hold oil within the felt, the oil then being fed to the gears via a wick system. This provides sufficient lubrication for the gears to operate at high speed and avoids the need for any 'free' oil in a gearbox.

In this way, oil is provided to the gears while avoiding free oil within the pump by using a wick to feed oil from a felt reservoir onto a tapered portion of the shaft. The oil migrates up the taper due to centrifugal force. A gear is located at the end of the taper section and the oil migrates onto this gear and then spreads to the perimeter where it lubricates the teeth.

Provision of oil in this way allows the pump to be shipped and perhaps even operated at any angle without issues of oil draining out of the gearbox into the pump mechanism.

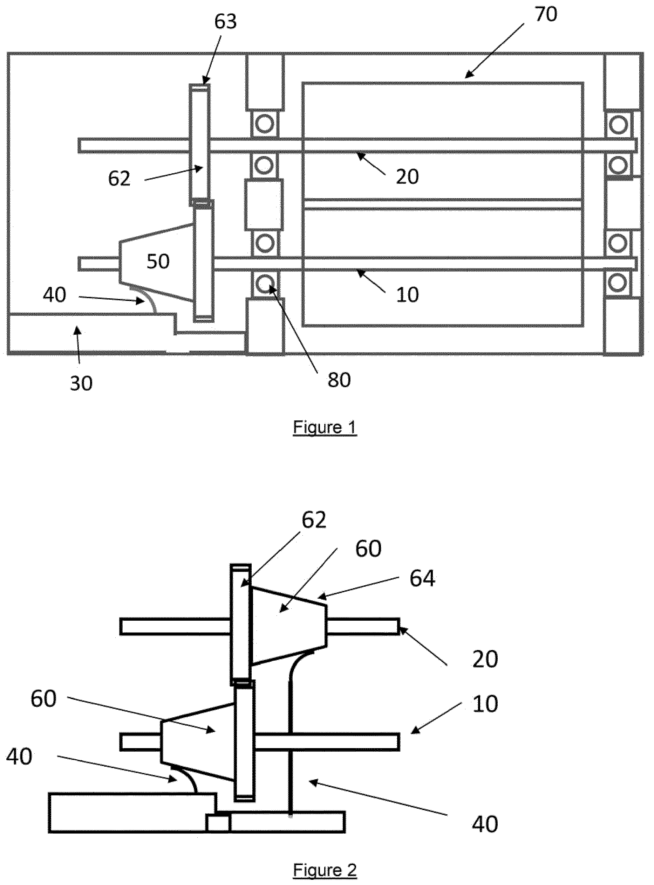

Figure 1 schematically shows a pump according to an embodiment, where twin shafts 10, 20 rotate driving interlocking rotors (not shown) within pumping chamber 70.

The two shafts 10, 20 extend beyond pumping chamber 70 on either side and are rotationally mounted by bearings 80. Timing gears 60 are mounted towards one end of both first shaft 10 and second shaft 20 and interlock via teeth 63 on the two gear wheels 62. This interlocking forces the shafts to rotate in synchronisation with each other and allows only one of the shafts to be directly driven, the other rotating in response to rotation of the driven shaft.

Lubrication of gears 60 is provided by oil from oil reservoir 30 which contains a porous material (not shown) such as felt. This oil is wicked from the reservoir 30 by wick 40 which extends from the oil reservoir 30 to a tapered conical surface 50 mounted on the first shaft 10. This tapered surface might be a part of the gear 60, such as the gear hub, or it may be a separate component mounted on shaft 10, or it may be machined into the shaft.

The oil is pulled by capillary action along wick 40 onto surface 50. The spinning of surface 50, when the pump is operational, pulls oil by centrifugal force along the increasing diameter of cone 50 to gear wheel 62. The oil migrates to the outer surface of this gear wheel and lubricates the interlocking teeth. Some of the oil is flung from the outer surface of the gear wheel 62 and due to the overlap of gear wheel 62 mounted on the second shaft 20 at an offset to gear wheel 62 on the first shaft 10, some of this oil is directed onto the overlapping surface and serves to help lubricate the gear wheel 62 on the second shaft 20. Any oil not "caught" by the gear wheel 62 on the second shaft 20 drains back into the reservoir. In this way both gear wheels are effectively lubricated by a single wick.

In this embodiment the gear wheels are at the high vacuum or inlet end of the vacuum pump where the pressure is generally sub-atmospheric. This reduces the effect of windage or air drag from disturbing the wick and the oil migration.

In the embodiment of Figure 1 first shaft 10, is shown as mounted below second shaft 20, this is purely for ease of illustration and in general the two shafts will be mounted side by side. The two shafts are mounted above an oil reservoir 30 such that oil flung from the gear wheels on either shaft will drain back into the oil reservoir. The shafts can be arranged in a different manner, they may for example be mounted as schematically shown that is one on top of the other or in a vertical orientation. In each case the oil reservoir 30 will be located beneath the shafts such that the wick 40 extends out of an upper surface of the reservoir 30 as is shown.

Figure 2 shows an embodiment similar to that of Figure 1 but with an additional wick 40 which extends towards the second shaft 20. In this embodiment each of the two wicks contacts a tapered surface which in this embodiment is the tapered hub 64 of the gears 60. This additional wick 40 means that the gear wheel 62 mounted on the second shaft 20 receives oil via a wick from the reservoir and not just from the gear wheel 62 mounted on the first shaft. This may improve lubrication. By supplying oil to the opposite side of the gear wheel, the offset mounting of the two gear wheels provides an overlap on the wick side for each gear wheel not directly lubricated by a wick on this side. Thus, oil flung from the lubricated side of each gear wheel will be directed towards the overlapping surface of the other gear wheel. In this embodiment as for Figure 1 the shafts are mounted side by side although they are shown as one on top of the other for ease of illustration.

In other embodiments not shown, the two gear wheels may be aligned. In such an embodiment, one of the gear wheels may be lubricated by a wick or they may both be lubricated independently using wicks extending to tapered surfaces on both shafts. In some cases, oil will be supplied to either side of the gear wheels and both gear wheels will be lubricated from both sides.

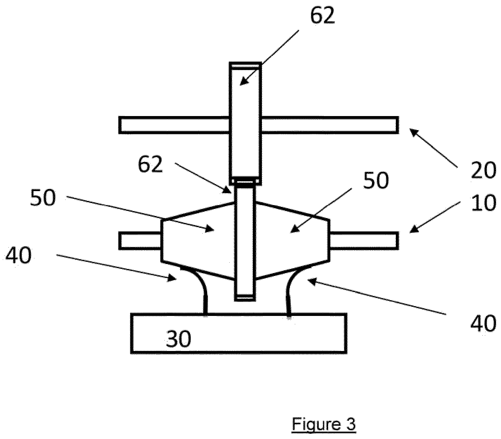

Figure 3 schematically shows a further embodiment, where the gear wheel 62 on the first shaft 10 is narrower than the gear wheel 62 on the second shaft 20, such that the gear wheel on the second shaft extends beyond the gear wheel 62 on the first shaft 10 on both sides. In this embodiment, two wicks 40 extend to tapered surfaces 50 on either side of the gear wheel 62 on the first shaft 10. Oil is thereby supplied to either side of the gear wheel 62 on the first shaft 10 and in operation rotation of this gear wheel causes oil to migrate to the outer surface and some of the oil to be flung from the outer surface and be received by the overlapping surfaces of gear wheel 62 on the second shaft 20, such that this thicker gear wheel is lubricated from oil supplied to the thinner gear wheel.

In summary, embodiments use an oil felt reservoir to lubricate the gears of a twin shaft vacuum pump, such as a screw pump or multi stage roots pump. The bearings may be grease lubricated, although in some embodiments these too are lubricated using the oil felt reservoir system. The advantage of this system is that there is no free oil in the pump that could drain into the pump mechanism if the pump is turned upside down say in transit.

### REFERENCE SIGNS

10 first shaft
20 second shaft
30 oil reservoir
40 wick
50 cone shaft extension
60 gear
62 gear wheel
63 gear teeth
64 gear hub
70 pump chamber
80 bearings

## Claims

1. A twin-shaft vacuum pump comprising:
two shafts (10, 20) configured to rotate in synchronisation, each of said shafts (10, 20) comprising a gear (60) mounted thereon, said gears (60) each comprising gear wheels (62), said gear wheels (62) being configured to intermesh to provide said synchronised rotation; and
an oil reservoir (30) comprising a porous material,
**characterised in that** the porous material is disposed within said oil reservoir (30) such that it is configured when supplied with oil to retain said oil within said porous material and avoid free oil being present within the pump; said oil reservoir (30) further comprises
at least one wick (40) extending from said oil reservoir (30) towards a first (10) of said two shafts (10, 20) and operable to supply oil by capillary action from said porous material along said wick (40) to lubricate said gears (60); and **in that**
said gear wheels (62) are at an end of the pump where the pressure is sub-atmospheric during pump operation.

2. A twin-shaft vacuum pump according to claim 1, wherein said at least one wick (40) extends to contact a surface of at least one of: said first shaft (10) and said gear (60) mounted on said first shaft (10).

3. A twin-shaft vacuum pump according to claim 1 or 2, wherein said at least one wick (40) extends to contact a tapered surface (50) having a diameter that increases towards said gear wheel (62) of said gear (60) mounted on said first shaft (10), rotation of said first shaft (10) causing said tapered surface (50) to rotate and exerting a centrifugal force on oil contacting said tapered surface (50) and causing said oil to migrate from said at least one wick (40) along said increasing diameter surface towards said gear wheel (62).

4. A twin-shaft vacuum pump according to any preceding claim, wherein said gears (60) mounted on said two shafts (10, 20) are offset with respect to each other.

5. A twin-shaft vacuum pump according to any preceding claim, wherein said gear (60) mounted on a second (20) of said two shafts (10, 20) is arranged to extend in an axial direction beyond said gear (60) on said first shaft (10) in a direction towards said wick (40) extending towards said first shaft (10).

6. A twin-shaft vacuum pump according to any preceding claim, wherein said wick (40) is arranged to extend towards a portion of said first shaft (10) on a side of said gear wheel (62) remote from a pumping chamber (70) of said pump.

7. A twin-shaft vacuum pump according to any one of claims 1 to 5, wherein said wick (40) is arranged to extend towards a portion of said first shaft (10) on a same side of said gear wheel (62) as a pumping chamber (70) of said pump.

8. A twin-shaft vacuum pump according to claim 6 when dependent on any one of claims 1 to 3, said pump comprising a further wick (40), said further wick (40) extending towards said first shaft (10) on a same side of said gear wheel (62) as said pumping chamber (70).

9. A twin-shaft vacuum pump according to claim 8, said gear wheel (62) mounted on said second shaft (20) being thicker than said gear wheel (62) mounted on said first shaft (10) and extending beyond said gear wheel (62) mounted on said first shaft (10) on both sides of said gear wheel (62).

10. A twin-shaft vacuum pump according to any preceding claim, said pump comprising a further wick (40) extending from said oil reservoir (30) towards said second (20) of said two shafts (10, 20), said wick (40) and said a further wick (40) being configured to supply oil to said gears (60) mounted on said respective shafts (10, 20).

11. A twin-shaft vacuum pump according to claim 10 when dependent on one of claims 4 or 5, wherein one of said wick (40) and said further wick (40) is arranged to extend towards a portion of one of said shafts (10, 20) on a same side of said gear wheel (62) as said pumping chamber (70) and the other of said wick (40) and said further wick (40) is arranged to extend towards a portion of the other shaft (10, 20) on a side of said gear wheel (62) remote from said pumping chamber (70).

12. A twin-shaft vacuum pump according claim 8, said pump comprising two further wicks (40) extending from said oil reservoir (30) towards said second of said two shafts (10), said two further wicks (40) extending towards said second shaft (20) on either side of said gear wheel (62).

13. A twin-shaft vacuum pump according to any preceding claim, said pump comprising two further wicks, respective ones of said further wicks extending towards each of said shafts (10, 20) and operable to supply oil by capillary action from said porous material along said wicks to lubricate bearings (80) in which said shafts (10, 20) are mounted.

14. A twin-shaft vacuum pump according to claim 13, said pump comprising a tapered surface on each of shafts (10, 20), said tapered surface having a diameter that increases towards said bearings (80), said two further wicks extending to contact said tapered surfaces.

15. A twin-shaft vacuum pump according to any preceding claim, wherein in operation said shafts (10, 20) are substantially horizontal and said oil reservoir (30) is mounted below said first shaft (10) and an opening in said reservoir (30) through which said wick (40) extends is in an upper surface of said reservoir (30).

## Patentansprüche

1. Doppelwellenvakuumpumpe, umfassend:
zwei Wellen (10, 20), dazu konfiguriert, sich in Synchronisation zu drehen, wobei jede der Wellen (10, 20) ein daran montiertes Getriebe (60) umfasst, wobei die Getriebe (60) jeweils Zahnräder (62) umfassen, wobei die Zahnräder (62) dazu konfiguriert sind, zu kämmen, um die synchronisierte Drehung bereitzustellen; und
einen Ölbehälter (30), umfassend ein poröses Material,
**dadurch gekennzeichnet, dass** das poröse Material in dem Ölbehälter (30) angeordnet ist, sodass er dazu konfiguriert ist, dann, wenn er mit Öl versorgt wird, das Öl innerhalb des porösen Materials zu halten und zu vermeiden, dass innerhalb der Pumpe freies Öl präsent ist;
wobei der Ölbehälter (30) ferner umfasst:
mindestens einen Docht (40), der sich von dem Ölbehälter (30) in Richtung einer ersten (10) der zwei Wellen (10, 20) erstreckt und dazu betreibbar ist, durch Kapillarwirkung Öl aus dem porösen Material entlang des Dochtes (40) zuzuführen, um die Getriebe (60) zu schmieren; und dadurch, dass
sich die Zahnräder (62) an einem Ende der Pumpe befinden, wo der Druck während Pumpenbetrieb subatmosphärisch ist.

2. Doppelwellenvakuumpumpe nach Anspruch 1, wobei sich der mindestens eine Docht (40) so erstreckt, dass er eine Oberfläche von der ersten Welle (10) und/oder dem an der ersten Welle (10) montierten Getriebe (60) kontaktiert.

3. Doppelwellenvakuumpumpe nach Anspruch 1 oder 2, wobei sich der mindestens eine Docht (40) so erstreckt, dass er eine konische Oberfläche (50) mit einem sich in Richtung des Zahnrades (62) des an der ersten Welle (10) montierten Getriebes (60) vergrößernden Durchmesser aufweist, wobei Drehung der ersten Welle (10) die konische Oberfläche (50) veranlasst, sich zu drehen und auf Öl, welches die konische Oberfläche (50) kontaktiert, eine Zentrifugalkraft auszuüben und das Öl zu veranlassen, von dem mindestens einen Docht (40) entlang der Oberfläche mit sich vergrößerndem Durchmesser in Richtung des Zahnrades (62) zu wandern.

4. Doppelwellenvakuumpumpe nach einem der vorhergehenden Ansprüche, wobei die auf den zwei Wellen (10, 20) montierten Getriebe (60) in Bezug zueinander versetzt sind.

5. Doppelwellenvakuumpumpe nach einem der vorhergehenden Ansprüche, wobei das auf einer zweiten (20) der zwei Wellen (10, 20) montierte Zahnrad (60) so angeordnet ist, dass es sich in einer axialen Richtung über das Getriebe (60) auf der ersten Welle (10) hinaus in einer Richtung hin zu dem sich in Richtung der ersten Welle (10) erstreckenden Docht (40) erstreckt.

6. Doppelwellenvakuumpumpe nach einem der vorhergehenden Ansprüche, wobei der Docht (40) so angeordnet ist, dass er sich auf einer von einer Pumpenkammer (70) der Pumpe entfernten Seite des Zahnrads (62) in Richtung eines Abschnitts der ersten Welle (10) erstreckt.

7. Doppelwellenvakuumpumpe nach einem der Ansprüche 1 bis 5, wobei der Docht (40) so angeordnet ist, dass er sich auf einer gleichen Seite des Zahnrads (62) wie eine Pumpenkammer (70) der Pumpe in Richtung eines Abschnitts der ersten Welle (10) erstreckt.

8. Doppelwellenvakuumpumpe nach Anspruch 6, wenn abhängig von einem der Ansprüche 1 bis 3, wobei die Pumpe einen weiteren Docht (40) umfasst, wobei sich der weitere Docht (40) auf einer gleichen Seite des Zahnrads (62) wie die Pumpenkammer (70) in Richtung der ersten Welle (10) erstreckt.

9. Doppelwellenvakuumpumpe nach Anspruch 8, wobei das auf der zweiten Welle (20) montierte Zahnrad (62) dicker als das auf der ersten Welle (10) montierte Zahnrad (62) ist und sich auf beiden Seiten des Zahnrads (62) über das auf der ersten Welle (10) montierte Zahnrad (62) hinaus erstreckt.

10. Doppelwellenvakuumpumpe nach einem der vorhergehenden Ansprüche, wobei die Pumpe einen weiteren Docht (40), der sich von dem Ölbehälter (30) in Richtung der zweiten (20) der zwei Wellen (10, 20) erstreckt, umfasst, wobei der Docht (40) und der weitere Docht (40) dazu konfiguriert sind, den auf den entsprechenden Wellen (10, 20) montierten Zahnrädern (60) Öl zuzuführen.

11. Doppelwellenvakuumpumpe nach Anspruch 10, wenn abhängig von einem der Ansprüche 4 oder 5, wobei einer von dem Docht (40) und dem weiteren Docht (40) so angeordnet ist, dass er sich auf einer gleichen Seite des Zahnrades (62) wie die Pumpenkammer (70) in Richtung eines Abschnitts einer der Wellen (10, 20) erstreckt, und der andere von dem Docht (40) und dem weiteren Docht (40) so angeordnet ist, dass er sich auf einer von der Pumpenkammer (70) entfernten Seite des Zahnrads (62) in Richtung eines Abschnitts der anderen Welle (10, 20) erstreckt.

12. Doppelwellenvakuumpumpe nach Anspruch 8, wobei die Pumpe zwei weitere Dochte (40), die sich von dem Ölbehälter (30) in Richtung der zweiten der zwei Wellen (10) erstrecken, umfasst, wobei sich die zwei weiteren Dochte (40) auf beiden Seiten des Zahnrads (62) in Richtung der zweiten Welle (20) erstrecken.

13. Doppelwellenvakuumpumpe nach einem der vorhergehenden Ansprüche, wobei die Pumpe zwei weitere Dochte umfasst, wobei sich einer der weiteren Dochte in Richtung jeder der Wellen (10, 20) erstreckt und dazu betreibbar ist, durch Kapillarwirkung Öl aus dem porösen Material entlang der Dochte zuzuführen, um Lager (80), in denen die Wellen (10, 20) montiert sind, zu schmieren.

14. Doppelwellenvakuumpumpe nach Anspruch 13, wobei die Pumpe eine konische Oberfläche auf jeder der Wellen (10, 20) umfasst, wobei die konische Oberfläche einen Durchmesser aufweist, der sich in Richtung der Lager (80) vergrößert, wobei sich die zwei weiteren Dochte so erstrecken, dass sie die konischen Oberflächen kontaktieren.

15. Doppelwellenvakuumpumpe nach einem der vorhergehenden Ansprüche, wobei die Wellen (10, 20) im Betrieb im Wesentlichen horizontal sind und der Ölbehälter (30) unter der ersten Welle (10) montiert ist und eine Öffnung in dem Behälter (30), durch die sich der Docht (40) erstreckt, in einer oberen Fläche des Behälters (30) angeordnet ist.

## Revendications

1. Pompe à vide à deux arbres comprenant :
deux arbres (10, 20) configurés pour tourner en synchronisation, chacun desdits arbres (10, 20) comprenant un engrenage (60) monté sur ce dernier, lesdits engrenages (60) comprenant chacun des roues dentées (62), lesdites roues dentées (62) étant configurées pour s'engrener afin de fournir ladite rotation synchronisée ; et
un réservoir d'huile (30) comprenant un matériau poreux,
**caractérisée en ce que** le matériau poreux est disposé à l'intérieur dudit réservoir d'huile (30) de sorte qu'il est configuré, lorsqu'il est alimenté en huile, pour retenir ladite huile dans ledit matériau poreux et éviter que l'huile libre ne soit présente dans la pompe ; ledit réservoir d'huile (30) comprend en outre :
au moins une mèche (40) s'étendant à partir dudit réservoir d'huile (30) vers un premier (10) desdits deux arbres (10, 20) et pouvant fonctionner pour fournir l'huile, par action de capillarité à partir dudit matériau poreux le long de ladite mèche (40) afin de lubrifier lesdits engrenages (60) ; et **en ce que** :
lesdites roues dentées (62) sont à une extrémité de la pompe où la pression est sous-atmosphérique pendant le fonctionnement de la pompe.

2. Pompe à vide à deux arbres selon la revendication 1, dans laquelle ladite au moins une mèche (40) s'étend pour entrer en contact avec une surface d'au moins l'un parmi : ledit premier arbre (10) et ledit engrenage (60) monté sur ledit premier arbre (10).

3. Pompe à vide à deux arbres selon la revendication 1 ou 2, dans laquelle ladite au moins une mèche (40) s'étend pour entrer en contact avec une surface progressivement rétrécie (50) ayant un diamètre qui augmente vers ladite roue dentée (62) dudit engrenage (60) monté sur ledit premier arbre (10), la rotation dudit premier arbre (10) provoquant la rotation de ladite surface progressivement rétrécie (50) et exerçant une force centrifuge sur l'huile en contact avec ladite surface progressivement rétrécie (50) et provoquant la migration de ladite huile de ladite au moins une mèche (40) le long de ladite surface de diamètre croissant vers ladite roue dentée (62).

4. Pompe à vide à deux arbres selon l'une quelconque des revendications précédentes, dans laquelle lesdits engrenages (60) montés sur lesdits deux arbres (10, 20) sont décalés l'un par rapport à l'autre.

5. Pompe à vide à deux arbres selon l'une quelconque des revendications précédentes, dans laquelle ledit engrenage (60) monté sur un second (20) desdits deux arbres (10, 20) est agencé pour s'étendre dans une direction axiale au-delà dudit engrenage (60) sur ledit premier arbre (10) dans une direction vers ladite mèche (40) s'étendant vers ledit premier arbre (10).

6. Pompe à vide à deux arbres selon l'une quelconque des revendications précédentes, dans laquelle ladite mèche (40) est agencée pour s'étendre vers une partie dudit premier arbre (10) d'un côté de ladite roue dentée (62) à distance d'une chambre de pompage (70) de ladite pompe.

7. Pompe à vide à deux arbres selon l'une quelconque des revendications 1 à 5, dans laquelle ladite mèche (40) est agencée pour s'étendre vers une partie dudit premier arbre (10) sur un même côté de ladite roue dentée (62) qu'une chambre de pompage (70) de ladite pompe.

8. Pompe à vide à deux arbres selon la revendication 6, lorsqu'elle dépend de l'une quelconque des revendications 1 à 3, ladite pompe comprenant une mèche supplémentaire (40), ladite mèche supplémentaire (40) s'étendant vers ledit arbre (10) sur un même côté de ladite tour dentée (62) que ladite chambre de pompage (70).

9. Pompe à vide à deux arbres selon la revendication 8, ladite roue dentée (62) montée sur ledit second arbre (20) étant plus épaisse que ladite roue dentée (62) montée sur ledit premier arbre (10) et s'étendant au-delà de ladite roue dentée (62) montée sur ledit premier arbre (10) des deux côtés de ladite roue dentée (62).

10. Pompe à vide à deux arbres selon l'une quelconque des revendications précédentes, ladite pompe comprenant une mèche supplémentaire (40) s'étendant à partir dudit réservoir d'huile (30) vers ledit second (20) desdits deux arbres (10, 20), ladite mèche (40) et ladite mèche supplémentaire (40) étant configurées pour fournir l'huile auxdits engrenages (60) montés sur lesdits arbres (10, 20) respectifs.

11. Pompe à vide à deux arbres selon la revendication 10, lorsqu'elle dépend de l'une des revendications 4 ou 5, dans laquelle l'une parmi ladite mèche (40) et ladite mèche supplémentaire (40) est agencée pour s'étendre vers une partie de l'un desdits arbres (10, 20) sur un même côté de ladite roue dentée (62) que ladite chambre de pompage (70) et l'autre parmi ladite mèche (40) et ladite mèche supplémentaire (40) est agencée pour s'étendre vers une partie de l'autre arbre (10, 20) d'un côté de ladite roue dentée (62) à distance de ladite chambre de pompage (70).

12. Pompe à vide à deux arbres selon la revendication 8, ladite pompe comprenant deux mèches supplémentaires (40) s'étendant à partir dudit réservoir d'huile (30) vers ledit second desdits deux arbres (10), lesdites deux mèches supplémentaires (40) s'étendant vers ledit second arbre (20) de chaque côté de ladite roue dentée (62).

13. Pompe à vide à deux arbres selon l'une quelconque des revendications précédentes, ladite pompe comprenant deux mèches supplémentaires, les mèches respectives desdites mèches supplémentaires s'étendant vers chacun desdits arbres (10, 20) et pouvant fonctionner pour fournir l'huile, par action de capillarité à partir dudit matériau poreux le long desdites mèches pour lubrifier des roulements (80) dans lesquels lesdits arbres (10, 20) sont montés.

14. Pompe à vide à deux arbres selon la revendication 13, ladite pompe comprenant une surface progressivement rétrécie sur chacun des arbres (10, 20), ladite surface progressivement rétrécie ayant un diamètre qui augmente vers lesdits roulements (80), lesdites deux mèches supplémentaires s'étendant pour être en contact avec lesdites surfaces progressivement rétrécies.

15. Pompe à vide à deux arbres selon l'une quelconque des revendications précédentes, dans laquelle, en fonctionnement, lesdits arbres (10, 20) sont sensiblement horizontaux et ledit réservoir d'huile (30) est monté sous ledit premier arbre (10) et une ouverture dans ledit réservoir (30) à travers laquelle ladite mèche (40) s'étend dans une surface supérieure dudit réservoir (30).
